# DEMANDE DE BREVET EUROPEEN

(11) **EP 4 700 366 A1**
(43) Date de publication de la demande: **25.02.2026**
(21) Numéro de dépôt: 25196753.5
(22) Date de dépôt: 19.08.2025
(51) Int. Cl.: G01N 21/25, G01N 21/85, G01N 21/94

(54) **UNITÉ DE CALCUL, DISPOSITIF DE DÉTERMINATION DE TEINTE, SYSTÈME DE DISTRIBUTION DE FLUIDE ET PROCÉDÉ DE DISTRIBUTION ASSOCIÉS**

(30) Priorité: 20.08.2024 FR 2408990
(71) Demandeur: Exel Industries, 51200 Epernay (FR)
(72) Inventeur: BAIDAOUI, Ahmed, 51200 EPERNAY (FR); FERRERE, Nicolas, 51200 EPERNAY (FR); MANCEL, Ilana, 51200 EPERNAY (FR)
(74) Mandataire: Lavoix

(57) **Abrégé**

La présente invention concerne une unité de calcul (50) pour un dispositif (14) comprenant :
- au moins une source de lumière (22) configurée pour émettre une lumière en direction d'un fluide ;
- un capteur de lumière (24) configuré pour recevoir un signal lumineux représentatif d'une teinte du fluide circulant dans un système de distribution de fluide (10), le capteur de lumière (24) étant en outre configuré pour émettre des grandeurs représentatives d'une intensité lumineuse du signal lumineux pour un canal de couleur donnée ;
l'unité de calcul comprenant un module d'estimation (52) configuré pour déterminer une variable représentative d'une teinte du fluide via un modèle d'intelligence artificielle, chaque grandeur représentative d'une intensité lumineuse étant une variable d'entrée du modèle, une variable de sortie du modèle d'intelligence artificielle étant la variable représentative d'une teinte du fluide.

## Description

La présente invention concerne une unité de calcul, un dispositif de détermination de teinte, un système de distribution de fluide et un procédé de distribution associés.

Dans le cadre d'une installation d'application de produit de revêtement, il est connu de déterminer la teinte d'un fluide, par exemple une peinture ou un liquide de nettoyage, circulant dans un système de distribution de fluide, afin de déterminer si la bonne teinte de peinture circule dans le système, ou si le liquide de nettoyage est pur, afin de connaître l'état de propreté du système de distribution de fluide. Par exemple, lors d'une opération de changement de teinte, il est connu de réaliser un contrôle visuel du fluide pulvérisé par le système de distribution afin de vérifier que l'opération de changement de teinte est achevée, et que la nouvelle teinte de peinture circule dans le système, sans être mélangée à l'ancienne peinture.

Il est également connu, par exemple de FR 3 127 281 A1, d'utiliser des capteurs de lumière afin de mesurer la teinte du fluide. Pour cela, il est connu d'utiliser une fibre optique, qui achemine un signal lumineux à un capteur de lumière, le signal lumineux étant représentatif de la teinte du fluide. Cependant, l'utilisation de la fibre optique cause une atténuation du signal lumineux. La valeur de l'atténuation dépend d'une longueur de la fibre optique, et des longueurs d'ondes composant le signal lumineux. Ainsi, il faut calibrer manuellement le capteur de lumière pour prendre en compte les atténuations causées par la fibre optique afin de correctement déterminer la teinte du fluide, ce qui est un processus long et complexe.

Le but de l'invention est alors résoudre ces inconvénients et de déterminer la teinte du fluide de manière plus simple et fiable.

A cet effet, l'invention a pour objet une unité de calcul pour un dispositif de détermination de teinte pour un système de distribution de fluide, le dispositif comprenant :
- au moins une source de lumière configurée pour émettre une lumière polychromatique ou monochromatique en direction du fluide dans une zone de mesure ;
- un capteur de lumière configuré pour recevoir un signal lumineux ayant été réfléchi sur le fluide ou transmis à travers le fluide, le signal lumineux correspondant à une réflexion optique ou respectivement, à une transmission optique, par le fluide, de la lumière polychromatique ou monochromatique émise en direction du fluide, le signal lumineux étant représentatif d'une teinte du fluide circulant dans le système de distribution de fluide, le capteur de lumière étant en outre configuré pour émettre des grandeurs, chaque grandeur étant représentative d'une intensité lumineuse du signal lumineux pour un canal de couleur donnée ; et

- une fibre optique d'acquisition configurée pour acheminer le signal lumineux au capteur de lumière ;
l'unité de calcul comprenant un module d'estimation configuré pour recevoir les grandeurs émises par le capteur de lumière.

Selon l'invention, le module d'estimation est configuré en outre pour déterminer une variable représentative d'une teinte du fluide via un modèle d'intelligence artificielle, préalablement entraîné, chaque grandeur représentative d'une intensité lumineuse du signal lumineux pour un canal de couleur donnée étant une variable d'entrée du modèle, une variable de sortie du modèle d'intelligence artificielle étant la variable représentative d'une teinte du fluide,
dans laquelle la variable représentative de la teinte du fluide est :
- un indice de pureté du fluide circulant dans le système de distribution de fluide ; ou
- un indicateur de classe parmi une pluralité de classes, chaque classe correspondant à une teinte prédéfinie de fluide.

Grâce à l'invention, la détermination de la teinte du fluide ne nécessite pas un calibrage manuel du capteur de lumière. De plus, l'utilisation du modèle d'intelligence artificielle permet d'obtenir des résultats fiables sans nécessiter d'étapes additionnelles de traitement du signal lumineux et en limitant la complexité des calculs réalisés, qui sont coûteux en ressources et en temps. Ainsi, la détermination de la teinte du fluide est plus simple pour les utilisateurs.

Suivant d'autres aspects avantageux de l'invention, l'unité de calcul comprend une ou plusieurs des caractéristiques suivantes, prises isolément ou suivant toutes les combinaisons techniquement possibles :
- l'indice de pureté est un nombre décimal, de préférence compris entre 0 et 1 ;
- l'indice de pureté est un nombre binaire,
l'indice de pureté étant alors de préférence un indicateur de classe parmi une première classe correspondant au cas où le fluide est propre, et une deuxième classe correspondant au cas où le fluide est sale ;
- le fluide est un liquide de revêtement ou un liquide de nettoyage ou un aérosol composé de particules colorées solides en suspension dans un gaz ;

L'invention concerne également un dispositif de détermination de teinte pour un système de distribution de fluide, comprenant :
- au moins une source de lumière configurée pour émettre une lumière polychromatique ou monochromatique en direction du fluide dans une zone de mesure ;
- un capteur de lumière configuré pour recevoir un signal lumineux ayant été réfléchi sur le fluide ou transmis à travers le fluide, le signal lumineux correspondant à une réflexion optique ou respectivement, à une transmission optique, par le fluide, de la lumière polychromatique ou monochromatique émise en direction du fluide, le signal lumineux étant représentatif d'une teinte du fluide circulant dans le système de distribution de fluide, le capteur de lumière étant configuré en outre pour émettre des grandeurs, chaque grandeur étant représentative d'une intensité lumineuse du signal lumineux pour un canal de couleur donnée ;
- une fibre optique d'acquisition configurée pour acheminer le signal lumineux au capteur de lumière; et
- une unité de calcul ainsi que décrite précédemment.

Avantageusement, les canaux de couleurs données sont des canaux rouge, vert, bleu et clair, les grandeurs étant représentatives d'une intensité lumineuse du signal lumineux respectivement pour le canal rouge, le canal vert, le canal bleu et le canal clair.

L'invention concerne également un système de distribution de fluide comprenant un circuit d'écoulement de fluide, et un dispositif de détermination de teinte ainsi que décrit précédemment, connecté en série au circuit d'écoulement de fluide.

L'invention concerne également un procédé de détermination de teinte d'un fluide circulant dans un système de distribution de fluide, mis en œuvre par un dispositif de détermination de teinte décrit précédemment, le procédé comprenant les étapes suivantes :
- émission d'une lumière polychromatique ou monochromatique en direction du fluide par l'au moins une source de lumière ;
- réception, par le capteur de lumière, du signal lumineux, réfléchi sur le fluide ou transmis à travers le fluide ;
- réception, par le module d'estimation, des grandeurs représentatives d'une intensité lumineuse du signal lumineux pour les canaux de couleurs données ; et
- détermination par le module d'estimation de la variable représentative de la teinte du fluide.

Suivant d'autres aspects avantageux de l'invention, le procédé de détermination de teinte comprend une ou plusieurs des caractéristiques suivantes, prises isolément ou suivant toutes les combinaisons techniquement possibles :
- le procédé comprend en outre les étapes suivantes :
   - détection d'une opération de changement de fluide lorsque la variable représentative de la teinte du fluide est modifiée ; et
   - une opération de changement de fluide ayant été détectée, détermination d'une fin de l'opération de changement de fluide, lorsque la variable représentative de la teinte du fluide est sensiblement constante pendant une durée prédéterminée, l'opération de changement de fluide étant de préférence un rinçage du système ou un changement de teinte de fluide circulant dans le système ;
- le fluide est un liquide de revêtement ou un liquide de nettoyage.

L'invention apparaîtra plus clairement à la lecture de la description qui va suivre, donnée uniquement à titre d'exemple non limitatif, et faite en référence aux dessins dans lesquels :
- [Fig. 1] la figure 1 est un schéma d'un système de distribution de fluide selon l'invention ; et
- [Fig. 2] la figure 2 est une vue en perspective et en coupe d'une partie du système de distribution de fluide de la figure 1, correspondant au détail A sur cette figure ;

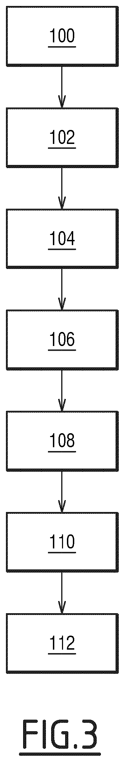

- [Fig. 3] la figure 3 est un logigramme d'un procédé selon l'invention ;
- [Fig. 4] la figure 4 est une vue en perspective d'une partie d'un système de distribution de fluide selon un deuxième mode de réalisation de l'invention, correspondant au détail A sur la figure 1.

L'invention est décrite ci-après dans le contexte d'un système de distribution de fluide de revêtement, par exemple de peinture, pour utilisation dans une installation d'application de produit de revêtement, en particulier par pulvérisation. La peinture se présente par exemple soit sous la forme d'un liquide, soit d'un aérosol, composé par exemple de particules colorées solides en suspension dans un gaz. Cependant, cela ne constitue pas une limitation de l'invention à cette application particulière, l'invention pouvant être mise en œuvre dans tout système de distribution de fluide adapté pour acheminer un fluide, dans lequel il est avantageux d'identifier la teinte du fluide, notamment pour superviser des opérations ou des phénomènes impliquant un changement de teinte du fluide. Le fluide peut être liquide ou gazeux, et en particulier, dans la suite de la description, le terme fluide inclut également des particules solides transportées par un flux de gaz, ou en suspension dans un gaz, en particulier un flux d'air. Les particules solides sont par exemple des poudres colorées.

Dans la suite de la description, l'expression « sensiblement égal(e) à » définit une relation d'égalité à plus ou moins 10%, de préférence encore à plus ou moins 5%.

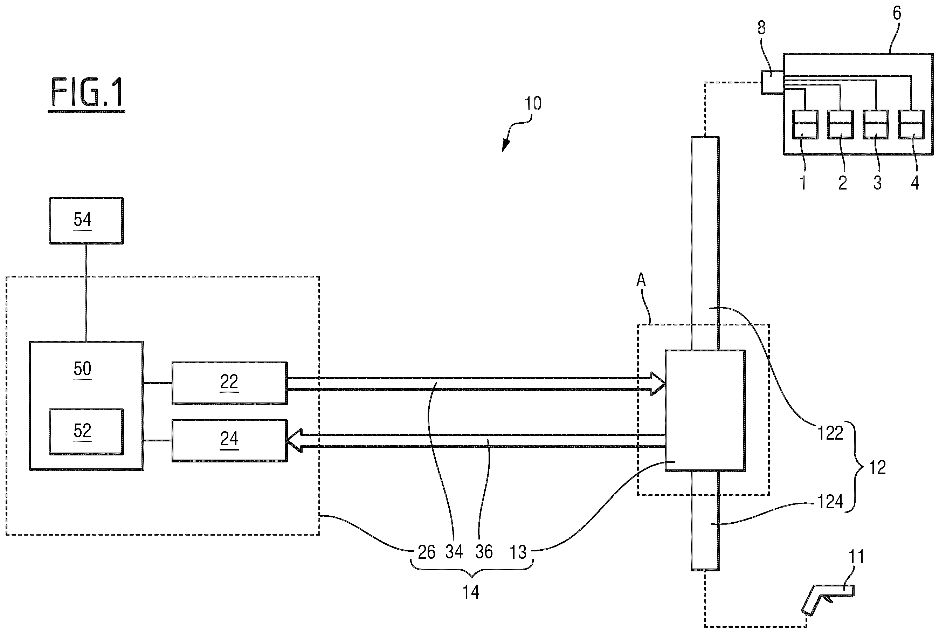

La figure 1 est un schéma d'un système de distribution de fluide 10. Le système de distribution de fluide 10 est, par exemple, un système de distribution de peinture, et comprend au moins un réservoir de composants de la peinture, un projecteur 11, également désigné pulvérisateur, et un circuit d'écoulement de fluide 12.

Dans l'exemple de la figure 1, le système de distribution de fluide 10 comprend trois réservoirs 1, 2 et 3 de peinture de teintes différentes et un réservoir 4 de liquide de nettoyage, par exemple aqueux, également appelé solvant. Les réservoirs 1 à 4 sont regroupés dans un local dédié 6, souvent dénommé broirie. Les nombre et la répartition des réservoirs 1 à 4 dans la broirie ne sont pas limitatifs. Ils sont adaptés en fonction de l'utilisation prévue pour le système de distribution de fluide 10.

Un dispositif de changement de teinte 8 est alimenté par les différents réservoirs 1 à 4 et permet de sélectionner quel produit, peinture ou liquide de nettoyage, circule dans le circuit d'écoulement de fluide 12 pour alimenter le projecteur 11.

Le projecteur peut, par exemple, être constitué par un pistolet manuel de pulvérisation, comme représenté sur la figure 1. En variante non représentée, il s'agit d'un projecteur automatique, de type pneumatique ou rotatif, monté sur le bras d'un robot, de type multiaxes ou réciprocateur.

Avantageusement, le projecteur 11 peut être de type électrostatique.

Le circuit d'écoulement de fluide 12 comprend des canalisations 122 et 124 et met en liaison fluidique le dispositif de changement de teinte 8, donc l'un des réservoirs 1 à 4, avec le projecteur 11 via les canalisations 122 et 124.

Le système de distribution de fluide 10 comprend, en outre, un dispositif de détermination de teinte 14.

Une partie du dispositif de détermination de teinte 14 est connectée en série au circuit d'écoulement de fluide 12, entre les canalisations 122 et 124.

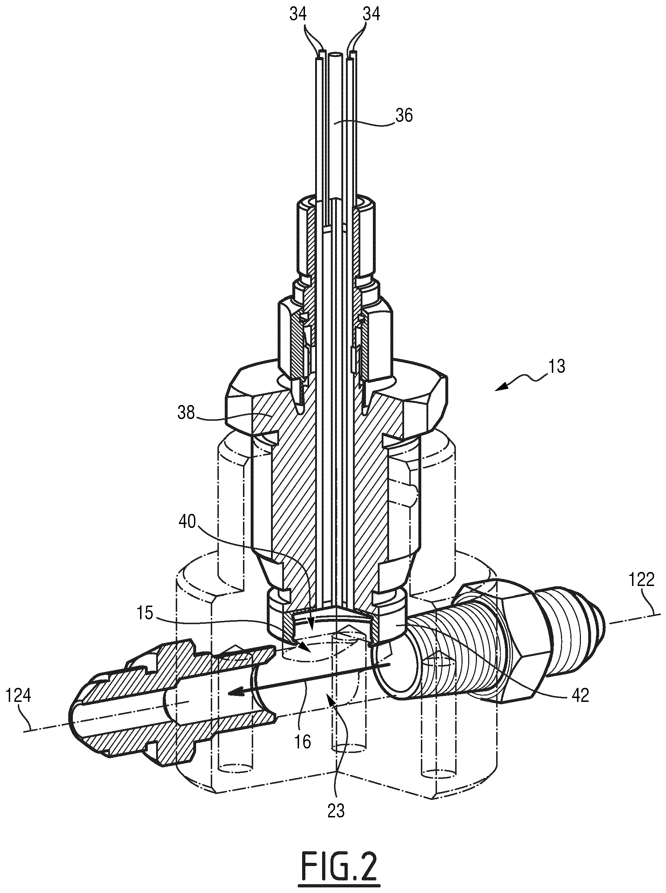

Avantageusement, le dispositif de détermination de teinte 14 comprend une bride 13, avantageusement opaque, qui définit une chambre 15, visible à la figure 2, à travers laquelle est ménagée une veine d'écoulement de fluide 16. La bride 13 est agencée pour être connectée de part et d'autre aux canalisations du circuit d'écoulement de fluide 12. La veine d'écoulement de fluide 16 est représentée par une flèche à la figure 2.

Le dispositif de détermination de teinte 14 comprend au moins une source de lumière 22. Il comprend, en outre, un capteur de lumière 24.

Dans l'exemple de la figure 1, le dispositif de détermination de teinte 10 ne comprend qu'une seule source de lumière 22. La source de lumière 22 est configurée pour émettre une lumière polychromatique, c'est-à-dire comprenant au moins deux longueurs d'ondes différentes, ou monochromatique, c'est-à-dire comprenant une unique longueur d'onde. La lumière polychromatique consiste de préférence en une lumière blanche. La source de lumière 22 est par exemple formée de plusieurs sources monochromatiques, de longueurs d'ondes respectives différentes, par exemple une source laser rouge, une source laser verte, et une source laser bleue, ou encore de plusieurs diodes électroluminescentes, ou LED, de l'anglais « Light-Emitting Diode » de couleur différente. En variante, la source de lumière 22 est une source de lumière émettant un spectre lumineux continu, comme une lampe à filament. De plus, la ou les source(s) de lumière peu(ven)t être configurée(s) pour émettre une lumière pulsée.

En variante, dans le cas où la source de lumière 22 est configurée pour émettre une lumière monochromatique, la source de lumière 22 est formée par exemple d'une ou de plusieurs sources monochromatiques de même longueur d'onde, par exemple un laser ou une LED monochromatique.

La source de lumière 22 est configurée pour émettre la lumière en direction du fluide, ici de la peinture, dans une zone de mesure 23, représentée en pointillés à la figure 2 et formée au sein de la chambre 15. En particulier, la lumière éclaire le fluide présent au sein de la veine d'écoulement 16, dans la zone de mesure 23.

Le capteur de lumière 24 est configuré pour recevoir un signal lumineux et pour émettre des grandeurs, chaque grandeur étant représentative d'une intensité lumineuse du signal lumineux pour un canal de couleur donnée. Les canaux de couleurs données sont par exemple un canal rouge, un canal vert et un canal bleu. En variante, les canaux de couleurs données sont un canal rouge, un canal vert, un canal bleu et un canal clair, ce dernier canal étant représentatif de l'intensité lumineuse du signal lumineux pris dans son ensemble. Dans ce cas, les grandeurs émises par le capteur de lumière 24 sont représentatives d'une intensité lumineuse du signal lumineux respectivement pour le canal rouge, le canal vert, le canal bleu et le canal clair. Autrement dit, le capteur de lumière 24 est configuré pour émettre une grandeur représentative d'une intensité lumineuse dans le système RVBC, ou Rouge Vert Bleu Clair.

L'intensité lumineuse est, par exemple et de manière connue en soi, représentée par un nombre compris entre 0 et 255, 0 correspondant à une intensité nulle pour le canal considéré, et 255 correspondant à une intensité maximale pour le canal considéré.

Il est possible de positionner le capteur de lumière 24 et/ou la source de lumière 22 à proximité de la zone de mesure 23. Toutefois, la qualité du fluide distribué ou son environnement peuvent souvent induire des contraintes de respect d'une réglementation pour une utilisation en atmosphère explosive, de type ATEX en Europe (pour « ATmosphère EXplosive »), comme dans le contexte du système de distribution de peinture. Or, l'utilisation d'un capteur de lumière 24 et/ou d'une source de lumière 22 compatible avec cette contrainte peut se révéler coûteux et son intégration au dispositif de mesure de teinte peut s'avérer complexe, voire impossible.

Ainsi, la source de lumière 22 et le capteur de lumière 24 sont, de préférence, disposés à distance du circuit d'écoulement de fluide 12, par exemple en étant regroupés dans un coffret de traitement 26 qui appartient également au dispositif de détermination de teinte 14.

Afin que la lumière émise par la source de lumière 22 éclaire le fluide dans la zone de mesure 23, le dispositif 14 comprend une ou plusieurs fibres optiques 34, dites fibres optiques d'éclairement. Les fibres optiques d'éclairement 34 sont avantageusement au nombre de quatre, ainsi que visible à la figure 2. Les fibres optiques d'éclairement 34 sont généralement longues de plusieurs mètres, par exemple au moins dix mètres, et préférentiellement, elles mesurent jusqu'à vingt-cinq mètres. Les fibres optiques d'éclairement 34 sont avantageusement connectées à la source de lumière 22 à l'une de leurs extrémités. L'autre extrémité des fibres optiques d'éclairement 34 est avantageusement situé dans la bride 13.

En variante non représentée, lorsque le dispositif 10 comprend plusieurs sources de lumière 22, chaque fibre optique d'éclairement 34 est connectée à l'une des sources de lumière 22.

Le dispositif 14 comprend, en outre, une fibre optique d'acquisition 36, qui est avantageusement connectée au capteur de lumière 24 par une de ses extrémités, l'autre extrémité étant localisée dans la bride 13. Ainsi, un signal lumineux provenant de la zone de mesure 23 est acheminé jusqu'au capteur de lumière 24 via la fibre optique 36. La fibre optique d'acquisition 36 est de même longueur que les fibres optiques d'éclairement 34.

Avantageusement, des moyens de maintien de l'extrémité ou des extrémités des fibres optiques d'éclairement et d'acquisition 34 et 36, comme par exemple un presse-étoupe 38, sont disposés dans la bride 13.

Avantageusement, le dispositif 14 comprend en outre une fenêtre d'observation 40 disposée de manière tangentielle à la veine d'écoulement de fluide 16, dans la bride 13. La fenêtre d'observation 40 peut notamment présenter la forme d'un hublot, comme visible sur la figure 2. Dans l'exemple de la figure 2, la zone de mesure 23 correspond à la portion de la veine d'écoulement de fluide 16 visible à travers la fenêtre d'observation 40.

Le dispositif 14 comprend avantageusement un élément de maintien 42 monté dans la bride 13, de manière à maintenir en position la fenêtre d'observation 40 et à garantir l'étanchéité de la veine d'écoulement de fluide 16. L'élément de maintien 42 peut, à titre d'exemple, comprendre un joint d'étanchéité encerclant la fenêtre d'observation 40.

Le dispositif 14 comprend en outre une unité de calcul 50. L'unité de calcul 50 est connectée à la source de lumière 22 et au capteur de lumière 24, et est formée, par exemple, d'une mémoire et d'un processeur associé à la mémoire, non représentés. L'unité de calcul 50 est avantageusement localisée à l'intérieur du coffret de traitement 26.

L'unité de calcul 50 comprend un module d'estimation 52, ainsi que visible à la figure 1. Dans l'exemple de la figure 1, le module d'estimation 52 est réalisé sous la forme d'un logiciel, ou d'une brique logicielle, exécutable par le processeur. La mémoire de l'unité de calcul 50 est alors apte à stocker le logiciel d'estimation et le processeur est alors apte à exécuter le logiciel d'estimation.

Le module d'estimation 52 est configuré pour recevoir les grandeurs émises par le capteur de lumière 24, puis pour déterminer une variable représentative d'une teinte du fluide via un modèle d'intelligence artificielle, préalablement entraîné, le modèle ayant, en variable d'entrée, chaque grandeur représentative d'une intensité lumineuse du signal lumineux pour un canal de couleur donnée et, en variable de sortie, une variable représentative d'une teinte du fluide. La variable représentative d'une teinte du fluide est représentative d'une couleur du fluide, ou en variante ou en complément, d'une opacité du fluide. En particulier, dans le cas où la lumière émise par la source de lumière 22 est monochromatique, la variable représentative d'une teinte du fluide est représentative de l'opacité du fluide. Dans le cas où la lumière émise par la source de lumière 22 est polychromatique, la variable représentative d'une teinte du fluide est représentative de l'opacité et/ou de la teinte du fluide.

La variable représentative de la teinte du fluide est par exemple un indice de pureté du fluide circulant dans le système de distribution de fluide 10. Selon cet exemple, l'indice de pureté est un nombre décimal, typiquement compris entre 0 et 1 ; ou encore un nombre binaire, typiquement égal à 0 ou 1. Lorsque l'indice de pureté est un nombre binaire, l'indice de pureté est avantageusement un indicateur de classe parmi une première classe lorsque le fluide 10 est propre, et une deuxième classe lorsque le fluide 10 est sale.

Selon un exemple, lorsque l'indice de pureté est un nombre décimal, il est directement proportionnel à l'opacité du fluide.

En variante, la variable représentative de la teinte du fluide est un indicateur de classe parmi une pluralité de classes, chaque classe correspondant à une teinte prédéfinie de fluide.

En variante non représentée, le module d'estimation 52 est réalisé sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit).*

Lorsque l'unité de calcul 50 est réalisée sous forme d'un ou plusieurs logiciels, c'est-à-dire sous forme d'un programme d'ordinateur, également appelé produit programme d'ordinateur, elle est en outre apte à être enregistrée sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

Le dispositif 14 comprend avantageusement une interface homme-machine 54, connectée à l'unité de calcul 50, afin d'afficher des informations à l'attention d'un utilisateur. En variante ou en complément, l'interface homme-machine 54 est utilisée par l'utilisateur afin de contrôler le dispositif 14. L'interface homme-machine 54 comprend alors typiquement un écran d'affichage, ainsi qu'en complément facultatif un dispositif de saisie, tel qu'un clavier et une souris, non représentés.

Le modèle d'intelligence artificielle est préalablement entraîné, avantageusement par apprentissage automatique, par exemple via un apprentissage supervisé, comme connu en soi.

L'apprentissage du modèle d'intelligence artificielle est typiquement effectué à partir de jeux de données d'apprentissage, chaque jeu de données d'apprentissage comportant des données d'apprentissage d'entrée correspondant aux variables d'entrée du modèle, à savoir aux grandeurs représentatives d'intensité lumineuse pour les canaux de couleurs données, et une donnée d'apprentissage de sortie correspondant à la variable représentative de teinte de fluide attendue, i.e. cible, pour ces données d'apprentissage d'entrée. L'apprentissage du modèle est alors par exemple effectué via une rétropropagation d'un gradient d'erreur, l'erreur étant calculée à partir d'une différence entre la donnée d'apprentissage de sortie et la variable de sortie estimée par le modèle à partir des données d'apprentissage d'entrée, c'est-à-dire à partir de la différence entre la variable représentative cible et la variable représentative estimée pour ces données d'apprentissage d'entrée.

Le modèle d'intelligence artificielle est par exemple une forêt aléatoire (de l'anglais *Random Forest*), un modèle de type machine à vecteur de support, ou SVM (de l'anglais *Support Vector Machine*), ou encore un réseau de neurones, ou ANN (de l'anglais *Artificial Neural Network*).

Dans le cas d'un réseau de neurones, celui-ci comporte une succession ordonnée de couches de neurones dont chacune prend ses entrées sur les sorties de la couche précédente.

Plus précisément, chaque couche comprend des neurones prenant leurs entrées sur les sorties des neurones de la couche précédente, ou bien sur les variables d'entrée pour la première couche.

En variante, des structures de réseaux de neurones plus complexes peuvent être envisagées avec une couche qui peut être reliée à une couche plus lointaine que la couche immédiatement précédente.

À chaque neurone est également associée une opération, c'est-à-dire un type de traitement, à effectuer par ledit neurone au sein de la couche de traitement correspondante.

Chaque couche est reliée aux autres couches par une pluralité de synapses. Un poids synaptique est associé à chaque synapse, et chaque synapse forme une liaison entre deux neurones. C'est souvent un nombre réel, qui prend des valeurs positives comme négatives. Dans certains cas, le poids synaptique est un nombre complexe.

Chaque neurone est propre à effectuer une somme pondérée des valeur(s) reçue(s) de la part des neurones de la couche précédente, chaque valeur étant alors multipliée par le poids synaptique respectif de chaque synapse, ou liaison, entre ledit neurone et les neurones de la couche précédente, puis à appliquer une fonction d'activation, typiquement une fonction non-linéaire, à ladite somme pondérée, et à délivrer en sortie dudit neurone, en particulier aux neurones de la couche suivante qui lui sont connectés, la valeur résultant de l'application de la fonction d'activation. La fonction d'activation permet d'introduire une non-linéarité dans le traitement effectué par chaque neurone. La fonction sigmoïde, la fonction tangente hyperbolique, la fonction de Heaviside sont des exemples de fonction d'activation.

En complément facultatif, chaque neurone est également apte à appliquer, en outre, un facteur multiplicatif, également appelé biais, à la sortie de la fonction d'activation, et la valeur délivrée en sortie dudit neurone est alors le produit de la valeur de biais et de la valeur issue de la fonction d'activation.

Un procédé de détermination de teinte du fluide circulant dans le circuit d'écoulement 12 est maintenant décrit. Le procédé est mis en œuvre par le dispositif 14.

Le fluide, par exemple la peinture ou l'aérosol, circule dans le système de distribution 10, en particulier, dans la veine d'écoulement de fluide 16 du dispositif 14. Le fluide est coloré, opaque ou éventuellement translucide, ou encore transparent.

Lors d'une étape 100 d'émission, la source de lumière 22 émet une lumière polychromatique ou monochromatique en direction du fluide, dans la zone de mesure 23. En particulier, la lumière est émise à travers les fibres optiques d'éclairement 34 jusqu'à leurs extrémités situées dans la bride 13. Le fluide circulant dans la zone de mesure 23 est ainsi éclairé par la lumière à travers la fenêtre d'observation 40.

La lumière réfléchie par le fluide forme un signal lumineux, qui correspond à la réflexion optique par le fluide de la lumière émise par la source de lumière 22. Le signal lumineux est représentatif de la teinte du fluide.

Le signal lumineux circule de la zone de mesure 23 à travers la fibre optique d'acquisition 36 jusqu'au capteur de lumière 24, qui reçoit le signal lumineux lors d'une étape 102 de réception. Le signal lumineux reçu par le capteur de lumière 24 est atténué, à cause des fibres optiques 34 et 36, qui causent une atténuation dépendante de leur longueur, et des longueurs d'ondes composant la lumière d'une part, et le signal lumineux d'autre part. Plus précisément, la lumière est atténuée lorsqu'elle circule dans les fibres optiques d'éclairement 34, et le signal lumineux est atténué lorsqu'il circule dans la fibre optique d'acquisition 36.

La bride opaque 13 permet, de manière avantageuse, de limiter fortement une éventuelle pollution lumineuse provenant du milieu extérieur, et ainsi, que le signal lumineux reçu par le capteur de lumière 24 lors de l'étape de réception 102 soit le plus fiable possible, avec le moins de pollution lumineuse extérieure.

Le capteur de lumière 24 convertit le signal lumineux reçu en grandeurs, chaque grandeur étant représentative de l'intensité lumineuse du signal lumineux pour un canal de couleur donnée. Dans l'exemple, le capteur de lumière 24 convertit le signal lumineux en quatre nombres compris entre 0 et 255, correspondant à l'intensité lumineuse pour chaque canal dans le système RVBC.

L'unité de calcul 50, en particulier le module d'estimation 52 reçoit les grandeurs lors d'une étape de réception 104.

Le module d'estimation 52 détermine la variable représentative d'une teinte du fluide via le modèle d'intelligence artificielle lors d'une étape de détermination 106. Chaque grandeur représentative de l'intensité lumineuse du signal lumineux pour un canal de couleur donnée est une variable d'entrée respective du modèle d'intelligence artificielle. La variable de sortie du modèle d'intelligence artificielle est la variable représentative de la teinte du fluide.

Avantageusement, une fois la variable représentative de la teinte du fluide déterminée par le module d'estimation 52, un message représentatif de la variable représentative de la teinte du fluide est affiché sur l'interface-homme machine 54, sous forme visuelle, et/ou éventuellement sous forme sonore, lors d'une étape d'affichage 108. En variante, lors de l'étape d'affichage 108, l'unité de calcul 50 envoie un message représentatif de la variable représentative de la teinte du fluide sur un terminal distant, par exemple un ordinateur ou un téléphone portable d'un utilisateur qui constitue alors l'interface homme machine 54.

Avantageusement, le procédé est mis en œuvre par le dispositif 14 pour réaliser l'une quelconque des trois tâches suivantes.

Une première tâche est une estimation d'une pureté du fluide circulant dans le système de distribution de fluide 10. Une telle tâche est réalisée par exemple lors d'un rinçage du système 10, par le liquide de nettoyage. Dans ce cas, la variable représentative d'une teinte du fluide est l'indice de pureté du fluide, et l'indice de pureté du fluide est en forme de nombre décimal. Par exemple, l'indice de pureté du fluide est un nombre décimal compris entre 0 et 1, ou encore, entre 0 et 100. L'indice de pureté du fluide correspond à la pureté du fluide circulant dans le système 10. Lors d'une opération de rinçage, le système 10 est initialement sale, et la variable représentative de la teinte du fluide sera par exemple sensiblement égale à zéro. Puis à mesure que le rinçage progresse, si le procédé de détermination de teinte est répété dans le temps, la valeur de la variable représentative de la teinte du fluide augmente, pour devenir sensiblement égale à 1 ou 100 par exemple, lorsque le fluide est pur, correspondant à un système 10 parfaitement propre.

Une deuxième tâche est une tâche de classification binaire de la pureté du fluide. Dans ce cas, la variable représentative d'une teinte du fluide est l'indice de pureté du fluide, cet indice étant alors en forme de nombre binaire. De préférence, l'indice de pureté est alors l'indicateur de classe parmi la première classe, correspondant au cas où le fluide est propre, et la deuxième classe, correspondant au cas où le fluide est sale. Cette tâche est par exemple réalisée lors d'un rinçage du système 10, afin de déterminer si le système 10 est propre ou non.

L'indice de pureté du fluide permet notamment de déterminer si le système 10 est propre ou sale, par exemple lors d'une opération de rinçage. En effet, si le fluide est considéré comme sale, autrement dit, si l'indice de pureté déterminé par le modèle indique la classe correspondant au fluide sale, alors le système 10 est considéré comme sale, et si l'indice de pureté déterminé par le modèle indique la classe correspondant au fluide propre, alors le système 10 est considéré comme propre.

De manière avantageuse, dans le cas des première et deuxième tâches, la variable représentative de la teinte du fluide est représentative de l'opacité du fluide, le fluide étant considéré comme sale lorsqu'il est opaque, et considéré comme propre lorsqu'il est transparent.

Une troisième tâche est une tâche de détermination de la teinte du fluide, parmi une palette de teintes prédéterminées. Dans ce cas, la variable représentative d'une teinte de fluide est représentative de la couleur du fluide. La variable représentative d'une teinte de fluide est alors l'indicateur de classe parmi la pluralité de classes, chaque classe correspondant à une teinte prédéfinie de fluide. Cette tâche est par exemple réalisée pour vérifier que la teinte du fluide circulant dans le système 10 est bien la teinte attendue.

De manière avantageuse, dans le cas où l'unité de calcul 50 est configurée pour réaliser plusieurs des trois tâches, des modèles séparés, entraînés séparément, sont utilisés pour chaque tâche. L'utilisateur indique par exemple quelle tâche il souhaite que le dispositif 14 effectue, et l'unité de calcul 50 utilise alors le modèle associé.

De manière avantageuse, dans le cas où un utilisateur souhaite réaliser seulement la première et/ou la deuxième tâche, la source lumineuse 22 est configurée pour émettre uniquement de la lumière monochromatique. En particulier, une lumière monochromatique est suffisante pour évaluer l'opacité du fluide, et donc pour que le modèle détermine la variable représentative de la teinte du fluide de manière fiable. L'apprentissage du modèle est alors réalisé également avec une lumière monochromatique.

De manière avantageuse, le procédé de détermination est réalisé en continu, et les valeurs successives de la variable représentative de la teinte du fluide sont stockées dans la mémoire de l'unité de calcul 50.

De manière optionnelle, l'unité de calcul 50 détecte une opération de changement de fluide lorsque la variable représentative de la teinte du fluide est modifiée par rapport à la variable représentative de la teinte du fluide précédemment déterminée lors d'une étape de détection 110, en particulier en cas de variation de la variable représentative de la teinte du fluide supérieure à un seuil prédéterminé. Dans le cas où la variable représentative de la teinte du fluide est un indicateur de classe, la variable représentative de la teinte du fluide est considérée comme modifiée lorsque la classe indiquée par la variable représentative de la teinte du fluide est modifiée. Dans le cas où la variable représentative de la teinte du fluide est un nombre binaire, la variable représentative de la teinte du fluide est considérée comme modifiée lorsque la valeur du nombre binaire change ; ou en variante, dans le cas d'un nombre décimal, lorsque la valeur du nombre varie d'au moins 10%. Avantageusement, l'utilisateur choisit lui-même la variation nécessaire pour que la variable représentative de la teinte du fluide soit considérée comme modifiée. L'opération de changement de fluide est avantageusement un rinçage ou un changement de teinte du fluide circulant dans le système 10.

Avantageusement, une opération de changement de fluide ayant été détectée à l'étape de détection 110, lorsque les variables représentatives de la teinte du fluide successives sont sensiblement constantes pendant une durée prédéterminée, l'unité de calcul 50 détermine qu'une opération de changement de teinte ou une opération de rinçage est terminée, lors d'une étape de détermination 112.

Par sensiblement constante, dans le cas où la variable représentative de la teinte du fluide est un nombre décimal, on entend qu'une variation des variables représentatives de la teinte du fluide déterminées successivement par le modèle d'intelligence artificielle est inférieure à 10% pendant une durée prédéterminée, de préférence inférieure à 5% pendant la durée prédéterminée. Dans le cas où la variable représentative de la teinte du fluide est un nombre binaire ou un indicateur de classe, on entend par sensiblement constante que les variables représentatives de la teinte du fluide déterminées successivement par le modèle d'intelligence artificielle sont identiques, i.e. inchangées.

Lorsque la variable représentative de la teinte du fluide est sensiblement constante pendant une durée prédéterminée, cela signifie que la teinte du fluide circulant dans le système 10 s'est stabilisée. Dans le cas d'un changement de teinte, cela signifie que la teinte souhaitée est obtenue, et dans le cas d'un rinçage, cela signifie que le système a été entièrement rincé. Avantageusement, l'unité de calcul 52 commande un affichage spécifique sur l'interface homme-machine 54, ou un envoi d'un message spécifique au terminal distant lorsque l'opération de changement fluide est terminée.

La durée prédéterminée utilisée pour considérer qu'une variable est stable est par exemple comprise entre 0,5 et 5 secondes.

En variante ou en complément, le dispositif 14 est configuré pour transmettre la variable représentative de la teinte du fluide à une unité de commande configurée pour commander une valve ou un ensemble de valves du système de distribution 10 en fonction de la variable représentative de la teinte du fluide. Ainsi, il est possible, par exemple, d'optimiser des opérations de changement de teinte, ou d'ajuster la composition du fluide afin d'obtenir la teinte désirée.

En complément de la description ci-dessus relative à l'apprentissage, i.e. entrainement, du modèle, l'entraînement du modèle est, par exemple, réalisé sous la forme d'un apprentissage supervisé. Le modèle reçoit en entrée des données comprenant des séries formées de grandeurs représentatives d'une intensité lumineuse du signal lumineux pour un canal de couleur donnée. Les séries correspondent à des données fournies par un capteur de lumière appartenant à un dispositif de détermination de teinte comprenant des fibres optiques d'éclairement et d'acquisition d'une longueur prédéfinie. Chaque série est associée avec une classe, ou un nombre décimal, en fonction de la tâche sur laquelle est entraîné le modèle. Le modèle apprend ensuite à effectuer une prédiction, et est entraîné jusqu'à obtenir une performance satisfaisante. Des opérations de validation des performances du modèle sont avantageusement effectuées.

Le modèle est ensuite intégré à l'unité d'estimation du dispositif 14, dont les fibres optiques 34 et 36 ont avantageusement la même longueur que celles utilisées pour l'entraînement du modèle. Cela permet d'obtenir des prédictions plus fiables par le modèle d'intelligence artificielle.

En variante, le modèle d'intelligence artificielle est entraîné par apprentissage par renforcement. Ainsi, alors que le modèle est en cours d'utilisation pour déterminer la teinte d'un fluide, un utilisateur indique par exemple si les prédictions du modèle sont correctes ou non, et le retour de l'utilisateur est pris en compte par le modèle dans ses prédictions futures. L'apprentissage par renforcement est avantageusement réalisé sur un modèle déjà entraîné et permet d'affiner les prédictions du modèle.

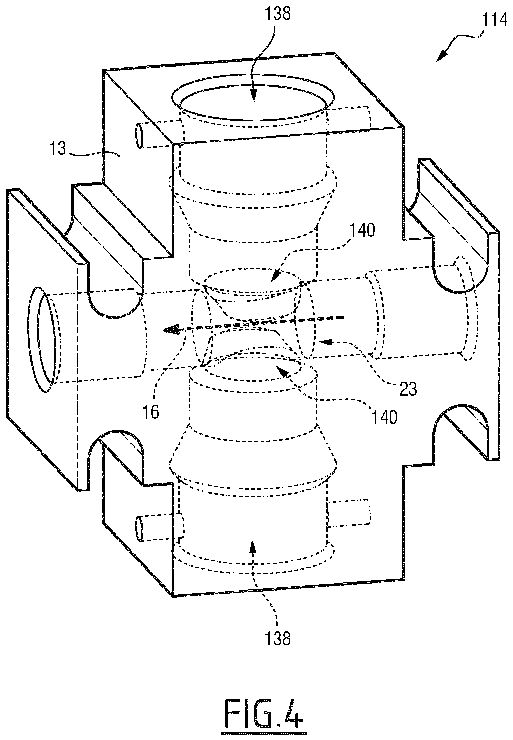

La figure 4 représente une bride 13 d'un dispositif de détermination de teinte 114 selon un deuxième mode de réalisation de l'invention. Le dispositif de détermination de teinte 114 est configuré pour réaliser une mesure de teinte par transmission du signal lumineux à travers le fluide. Dans ce cas, la bride 13 du dispositif de mesure de teinte 114 comprend avantageusement deux évidements 138 pour insérer d'une part les extrémités de fibres optiques d'éclairement 34, et d'autre part la fibre optique d'acquisition 36, et deux fenêtres d'observation 140 disposées de manière tangentielle à la veine d'écoulement de fluide 16 qui traverse une zone de mesure 23, chaque fenêtre d'observation étant au fond d'un des évidements 138. Avantageusement, les fenêtres d'observation 140 sont en vis-à-vis l'une de l'autre.

Le procédé de détermination du fluide est inchangé, à l'exception du fait que le signal lumineux correspond à la transmission optique, par le fluide, de la lumière émise en direction du fluide par la source de lumière 22.

Toute caractéristique décrite pour un mode de réalisation ou une variante dans ce qui précède peut être mise en œuvre pour les autres modes de réalisation et variantes décrits précédemment, pour autant que techniquement faisable.

## Revendications

1. Unité de calcul (50) pour un dispositif de détermination de teinte (14 ; 114) pour un système de distribution de fluide (10), le dispositif (14 ; 114) comprenant:
- au moins une source de lumière (22) configurée pour émettre une lumière polychromatique ou monochromatique en direction du fluide dans une zone de mesure (23) ;
- un capteur de lumière (24) configuré pour recevoir un signal lumineux ayant été réfléchi sur le fluide ou transmis à travers le fluide, le signal lumineux correspondant à une réflexion optique ou respectivement, à une transmission optique, par le fluide, de la lumière polychromatique ou monochromatique émise en direction du fluide, le signal lumineux étant représentatif d'une teinte du fluide circulant dans le système de distribution de fluide (10), le capteur de lumière (24) étant en outre configuré pour émettre des grandeurs, chaque grandeur étant représentative d'une intensité lumineuse du signal lumineux pour un canal de couleur donnée ; et
- une fibre optique d'acquisition (36) configurée pour acheminer le signal lumineux au capteur de lumière (24) ;
l'unité de calcul (50) comprenant un module d'estimation (52) configuré pour recevoir les grandeurs émises par le capteur de lumière (24),
**caractérisée en ce que** le module d'estimation (52) est configuré en outre pour déterminer une variable représentative d'une teinte du fluide via un modèle d'intelligence artificielle, préalablement entraîné, chaque grandeur représentative d'une intensité lumineuse du signal lumineux pour un canal de couleur donnée étant une variable d'entrée du modèle, une variable de sortie du modèle d'intelligence artificielle étant la variable représentative d'une teinte du fluide,
dans laquelle la variable représentative de la teinte du fluide est :
- un indice de pureté du fluide circulant dans le système de distribution de fluide (10) ; ou
- un indicateur de classe parmi une pluralité de classes, chaque classe correspondant à une teinte prédéfinie de fluide.

2. Unité de calcul (50) selon la revendication 1, dans laquelle l'indice de pureté est un nombre décimal, de préférence compris entre 0 et 1.

3. Unité de calcul selon la revendication 1, dans laquelle l'indice de pureté est un nombre binaire,
l'indice de pureté étant alors de préférence un indicateur de classe parmi une première classe correspondant au cas où le fluide (10) est propre, et une deuxième classe correspondant au cas où le fluide (10) est sale.

4. Unité de calcul (50) selon l'une quelconque des revendications précédentes, dans laquelle le fluide est un liquide de revêtement ou un liquide de nettoyage ou un aérosol composé de particules colorées solides en suspension dans un gaz.

5. Dispositif de détermination de teinte (14 ; 114) pour un système de distribution de fluide (10), comprenant :
- au moins une source de lumière (22) configurée pour émettre une lumière polychromatique ou monochromatique en direction du fluide dans une zone de mesure (23) ;
- un capteur de lumière (24) configuré pour recevoir un signal lumineux ayant été réfléchi sur le fluide ou transmis à travers le fluide, le signal lumineux correspondant à une réflexion optique ou respectivement, à une transmission optique, par le fluide, de la lumière polychromatique ou monochromatique émise en direction du fluide, le signal lumineux étant représentatif d'une teinte du fluide circulant dans le système de distribution de fluide (10), le capteur de lumière (24) étant configuré en outre pour émettre des grandeurs, chaque grandeur étant représentative d'une intensité lumineuse du signal lumineux pour un canal de couleur donnée ;
- une fibre optique d'acquisition (36) configurée pour acheminer le signal lumineux au capteur de lumière (24) ; et
- une unité de calcul (50) selon l'une quelconque des revendications précédentes.

6. Dispositif (14 ; 114) selon la revendication 5, dans lequel les canaux de couleurs données sont des canaux rouge, vert, bleu et clair, les grandeurs étant représentatives d'une intensité lumineuse du signal lumineux respectivement pour le canal rouge, le canal vert, le canal bleu et le canal clair.

7. Système de distribution de fluide (10) comprenant un circuit d'écoulement de fluide (12), et un dispositif de détermination de teinte (14 ; 114) selon la revendication 5 ou 6, connecté en série au circuit d'écoulement de fluide (12).

8. Procédé de détermination de teinte d'un fluide circulant dans un système de distribution de fluide (10), mis en œuvre par un dispositif de détermination de teinte (14 ; 114) selon la revendication 5 ou 6, le procédé comprenant les étapes suivantes :
- émission (100) d'une lumière polychromatique ou monochromatique en direction du fluide par l'au moins une source de lumière (22) ;
- réception (102), par le capteur de lumière (24), du signal lumineux, réfléchi sur le fluide ou transmis à travers le fluide ;
- réception (104), par le module d'estimation (52), des grandeurs représentatives d'une intensité lumineuse du signal lumineux pour les canaux de couleurs données ; et
- détermination (106) par le module d'estimation (52) de la variable représentative de la teinte du fluide.

9. Procédé de détermination selon la revendication 8, comprenant en outre les étapes suivantes:
- détection (110) d'une opération de changement de fluide lorsque la variable représentative de la teinte du fluide est modifiée ; et
- une opération de changement de fluide ayant été détectée, détermination (112) d'une fin de l'opération de changement de fluide, lorsque la variable représentative de la teinte du fluide est sensiblement constante pendant une durée prédéterminée,
l'opération de changement de fluide étant de préférence un rinçage du système ou un changement de teinte de fluide circulant dans le système (10).

10. Procédé de détermination selon la revendication 8 ou 9, dans lequel le fluide est un liquide de revêtement ou un liquide de nettoyage.
